# EUROPEAN PATENT APPLICATION

(11) **EP 1 148 456 A1**
(43) Date of publication of application: **24.10.2001**
(21) Application number: 00830257.2
(22) Date of filing: 05.04.2000
(51) Int. Cl.: G08B 25/10

(54) **Maintenance system for shelters**

(71) Applicant: Eudosia S.P.A., 20145 Milan (IT)
(72) Inventor: Feliziani, Pierpaolo, 63013 Grottammare (Ascoli Piceno) (IT); Grassi, Maria, 15050 Montemarzino (Alessandria) (IT)
(74) Representative: Pezzoli, Ennio

(57) **Abstract**

Maintenance system (100) for shelters (105) each comprising means (250) for detecting alarm conditions of the shelter (105) and means (275) for sending an alarm signal indicating the condition detected to a remote control centre (110); the control centre (110) comprises means (340) for determining a maintenance action in response to the alarm signal and means (335) for sending a command signal indicating the maintenance action to the shelter (105), the shelter (105) further comprising means (250) for carrying out the maintenance action in response to the command signal.

## Description

The present invention relates to a maintenance system for shelters.

Shelters are commonly used to house various types of equipment, for example telecommunications equipment, so as to ensure the correct environmental conditions (such as temperature, humidity, and the like) necessary for operation of the equipment.

Both the shelters and the equipment housed in them are very costly; moreover, the continuity of operation of said equipment is extremely important. Therefore, it is necessary to ensure that there is an extremely efficient system for maintenance of the shelters which is able to avoid damage to the equipment and limit as far as possible the duration of any interruption in operation.

A known solution consists in providing a remote control centre which is connected (for example by radio) to each shelter. Whenever an alarm condition (such as an incorrect temperature, problem with the electrical power supply or attempted break-in) occurs, the shelter sends a corresponding alarm signal to the control centre. Consequently, an operator in the control centre immediately sends out a maintenance team to the shelter.

A drawback of this solution is that a maintenance team must be sent out to the shelter on each occasion. This greatly increases the maintenance costs, in particular when the shelters are located in zones which are difficult to access (such as a desert, for example). Moreover, it is necessary to carry out periodic on-site checks of the shelters (independently of alarm signals) in order to monitor constantly their operating conditions.

The object of the present invention is to overcome the above mentioned drawbacks. In order to achieve this object, a maintenance system for shelters as described in the first claim is proposed.

In short, the present invention envisages a maintenance system for shelters each comprising means for detecting alarm conditions of the shelter and means for sending an alarm signal indicating the condition detected to a remote control centre; the control centre comprises means for determining a maintenance action in response to the alarm signal and means for sending a command signal indicating the maintenance action to the shelter, the shelter further comprising means for carrying out the maintenance action in response to the command signal.

Moreover, the present invention also proposes a monitoring apparatus, a shelter and a control centre for use in such a maintenance system, and a corresponding maintenance method for shelters.

Further characteristic features and advantages of the maintenance system according to the present invention will emerge from the following description of a preferred embodiment thereof, provided by way of a non-limiting example, with reference to the accompanying drawings, in which:
Fig. 1 shows the maintenance system in schematic form;
Figs. 2 and 3 show a basic block diagram of the shelter and the control centre, respectively;
Figs. 4 and 5 show a flow diagram of a method used for managing, respectively, the shelter and the control centre.

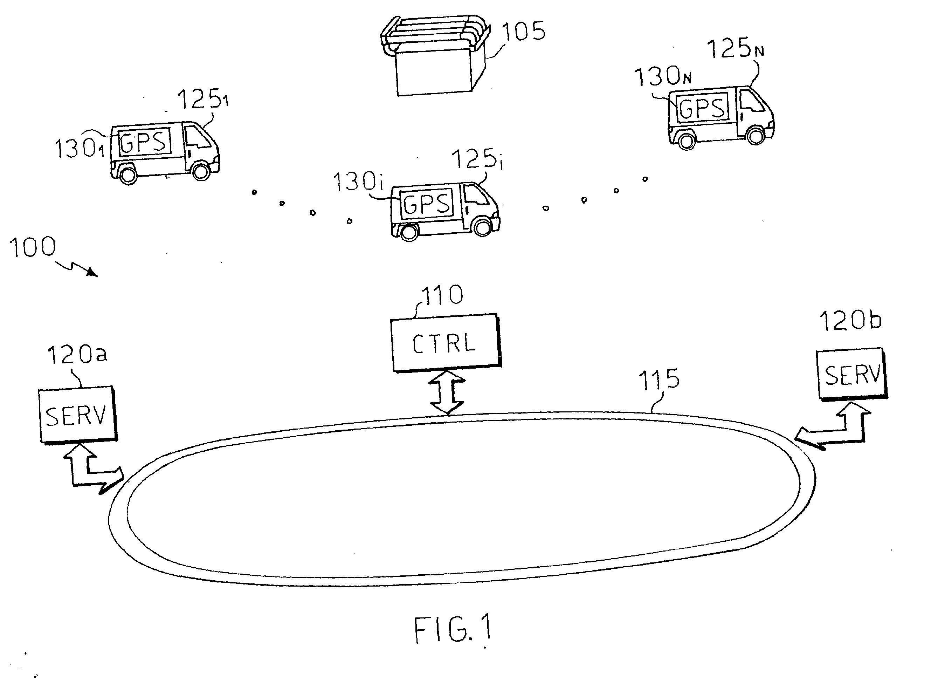

With reference in particular to Fig. 1, this figure shows a maintenance system 100 for shelters 105 (for example some tens in number, only one being shown in the Figure). The maintenance system 100 includes a remote control centre (CTRL) 110 connected to a telematic network 115, typically the Internet. Various external assistance centres (SERV) which are specialised in a specific sector, such as, for example, a centre specialised in air-conditioning plants 120a and a centre specialised in electrical plants 120b, are also connected to the telematic network 115.

Various maintenance teams 125i (where i=1...N, for example some tens) are available in the maintenance system 100. Each maintenance team 125i has a van equipped with a control unit 130i; the control unit 130i comprises a position detector of the GPS (Global Positioning System) type and a transceiver of the satellite type.

Similar considerations apply where there is a different number of shelters (even only one), the shelter houses equipment of a different type (for example equipment for controlling optical fibre lines or gas, oil or water supply networks), there is a different number of assistance centres specialised in other sectors or a different number of maintenance teams provided with other means of transportation (such as all-terrain vehicles equipped with a different position detection and communications system), and the like.

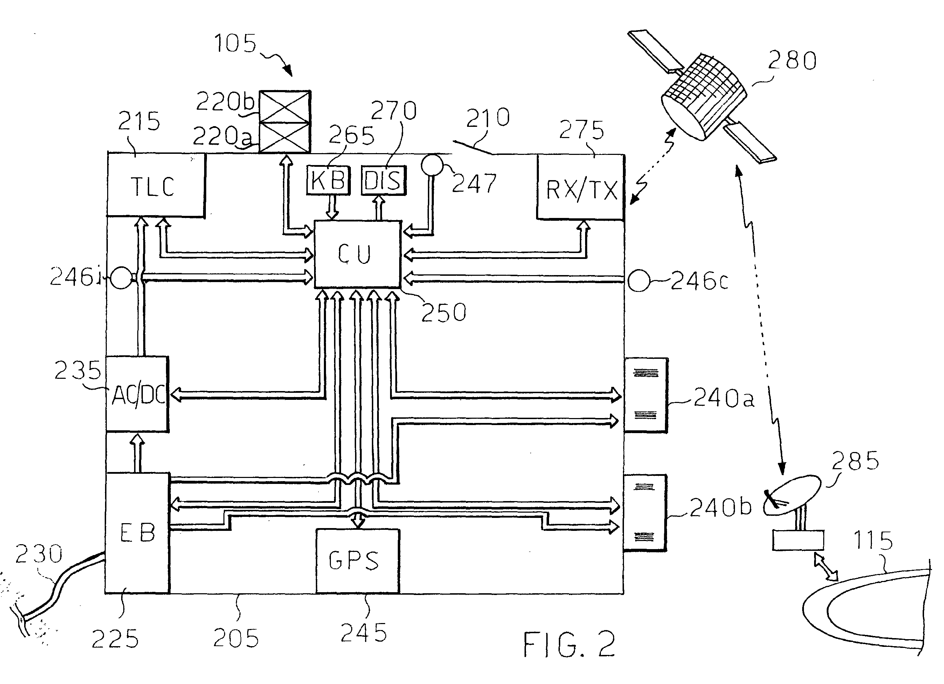

With reference now to Fig. 2, the shelter 105 consists of an isolated cabin 205 to which there is access by means of an entrance door 210. Telecommunications equipment (TLC) 215 for a mobile telephone network (not shown in the figure) is housed inside the shelter 105. An antenna terminating in a pair of aircraft signalling lamps (SOV) 220a and 220b is arranged on a trellis (not shown in the figure) associated with the cabin 205.

The shelter 105 includes an electrical panel (EB) 225 which is connected to an alternating voltage power supply network 230. The electrical panel drives a power supply unit (AC/DC) 235 which produces a direct power supply voltage (for example 48V). The shelter 105 is equipped with a pair of air-conditioners 240a and 240b and a GPS detector 245. The shelter 105 also comprises an internal temperature sensor 246i, an external temperature sensor 246e and a door opening sensor 247.

A programmable logic controller (PLC) manages operation of all the above mentioned operating units of the shelter 105. In particular, the PLC consists of a control unit (CU) 250 equipped with a working memory of the RAM type and a non-volatile memory of the E²PROM type which is connected to a control panel (KB) 265 and a monitor (DIS) 270; the PLC is also equipped with a backup battery for ensuring a certain period of operation in the absence of a power supply. A transceiver (RX/TX) of the satellite type 275 is connected to the control unit 250; the transceiver 275 communicates, via a satellite 280, with a ground station 285 which is connected to the telematic network 115 (and therefore to the control centre).

Similar considerations apply where the shelter has a different structure and is equipped with different operating units (for example a passive air-conditioning system, humidity sensors, pressure sensors), the PLC is replaced by other equivalent logic means, a different system is used for connecting the shelter and the control centre, etc; for example, the ground station communicates directly via satellite with the control centre (using a faster, but more costly structure) or the shelter communicates with the control centre via a mobile telephone network, for example a GSM network (which has a very flexible structure, but cannot be used in areas which are not covered by the GSM network).

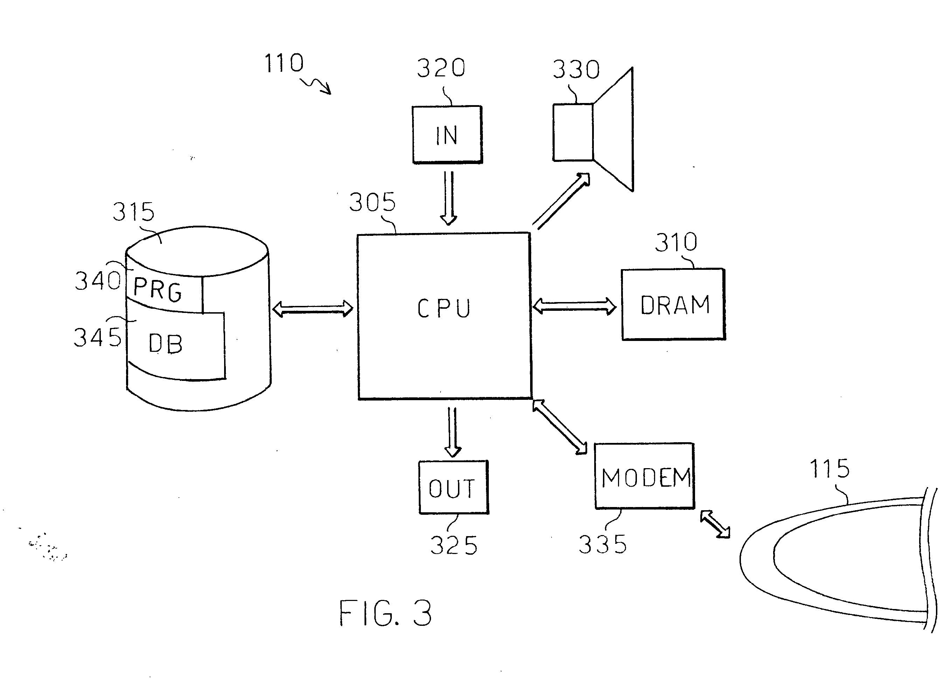

With reference now to Fig. 3, the control centre 110 is equipped with a computer, for example a personal computer, comprising a central processing unit (CPU) 305 which has, associated with it, a working memory 310 of the DRAM type and a mass memory 315 consisting of a magnetic hard disk, a driver device for reading optical disks (CD ROMs) and a driver device for reading/writing floppy disks. The CPU 305 is connected in a conventional manner to an input unit (IN) 320, which consists of a keyboard with a mouse, and an output unit (OUT) 325, consisting of a monitor and a printer. An acoustic warning device 330 and a modem 335 (which manages communication with the telecommunications network 115) are also connected to the CPU 305.

A management program (PRG) 340, which is loaded into the working memory 310 when run, is stored in the mass memory 315. The mass memory 315 also contains a data base (DB) 345, which is used by the management program 340.

Similar considerations apply where the processor has a different structure (for example with a visual warning device, a central unit equipped with various terminals, several computers connected in a local network), the data base is replaced by a series of files, and the like.

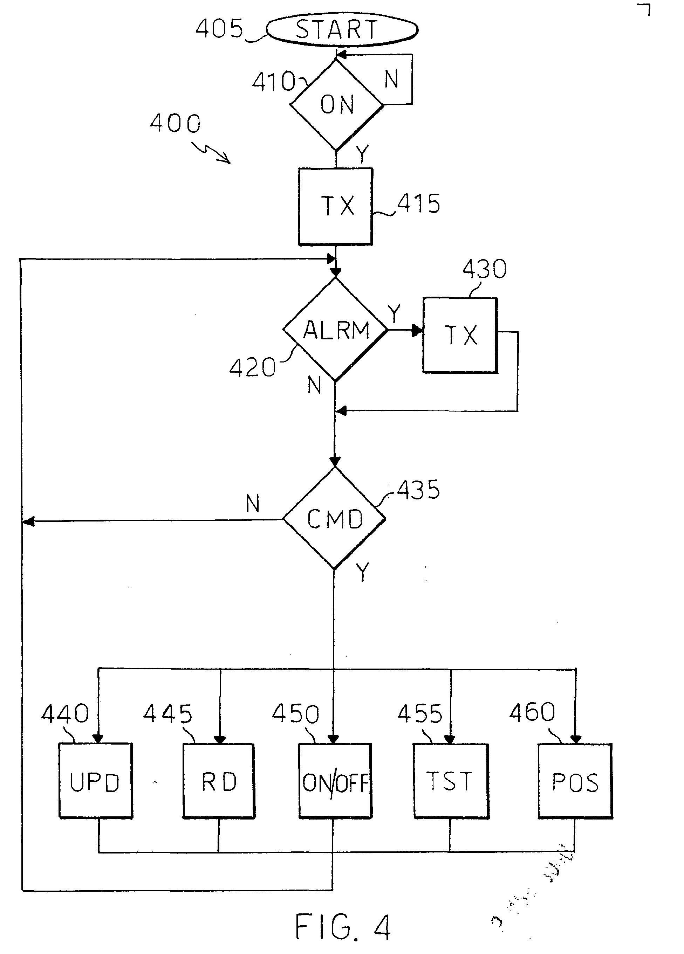

If we now consider Fig. 4 (together with Fig. 2), when the PLC is switched on, the control unit 250 loads from the internal E²PROM memory a suitable control program. A method 400 corresponding to this control program starts at block 405 and then passes to block 410 where it checks whether the shelter 105 is active. If this is not the case, the method returns to block 410 in an idle loop. However, if the shelter is active, the method proceeds to block 415 where a corresponding signal for (initial) activation of the shelter 105 is sent to the control centre; in particular, the activation signal is sent by the transceiver 275 to the satellite 280 and then to the ground station 285; the ground station 285 sends a corresponding e-mail message to the control centre via the telematic network 115.

The method then proceeds to block 420 where the control unit 250 polls the various operating units of the shelter 105 (telecommunications equipment 215, signalling lamps 220a,220b, electrical panel 225, power supply unit 235, air-conditioners 240a,240b and sensors 246i, 246e,247) in order to check whether an alarm condition has occurred; for example, typical alarm conditions consist of the door 210 being opened following an attempted break-in, one of the signalling lamps 220a,220b not functioning correctly, an interruption in the power supply network, the power supply voltage dropping below a predefined threshold value, an incorrect temperature value, malfunctioning of one of the air-conditioners 240a,240b, etc. If an alarm condition is detected, the method proceeds to block 430, where a corresponding alarm signal (identifying the shelter) is sent to the control centre, and then proceeds to block 435; if an alarm condition is not detected, the method passes instead directly to block 435.

At block 435 the method then checks whether a command signal has been received from the control centre (via the transceiver 275). If the shelter 105 has not received any command signal, the method returns to block 420, otherwise it performs the action corresponding to the command signal, at the end of which the method returns to block 420.

In particular, if the command signal indicates a request for modification of the operational parameters of the shelter 105, the method passes to block 440, where the control unit 250 modifies these operational parameters; for example, it is possible to modify the critical threshold values which determine the alarm conditions for the various operating units of the shelter 105, modify the operation of these units, and the like.

If the command signal indicates a request for detection of status parameters of the shelter 105, the method passes to block 445, where the control unit 250 detects these status parameters and sends a signal indicating the parameters detected to the control centre; for example, it is possible to detect general operating parameters of the various units of the shelter 105 or of specific modules inside these units, other parameters such as the air-filter status of the shelter (in order to check for possible blockages), and the like.

If the command signal indicates a request for activation or deactivation of a specific operating unit of the shelter 105, the method proceeds to block 450, where the control unit 250 consequently activates or deactivates this operating unit; for example, it is possible to deactivate one of the signalling lamps 220a,220b or one of the air-conditioners 240a,240b in the event of a malfunction (while operation is ensured by the other signalling lamp or other air-conditioner), deactivate a defective operating unit to avoid further damage, and the like.

If the command signal indicates a request for testing the shelter 105, the method passes to block 455, where the control unit 250 performs an automatic procedure for testing the various operating units of the shelter 105 and sends a signal indicating a corresponding result of the test to the control centre.

Finally, if the command signal indicates a request for detecting the position of the shelter 105, the method passes to block 460, where the control unit 250 activates the GPS detector 245 for obtaining the current position of the shelter 105 (with a degree of accuracy of about 90 m) and sends a corresponding position signal to the control centre.

Similar considerations apply where the control program performs a different equivalent method, the alarm conditions are managed by means of interrupt requests sent from the various operating units to the control unit 250 (which may be maskable depending on their priority), the ground station communicates with the remote centre by means of messages of the instantaneous type, faxes, and the like.

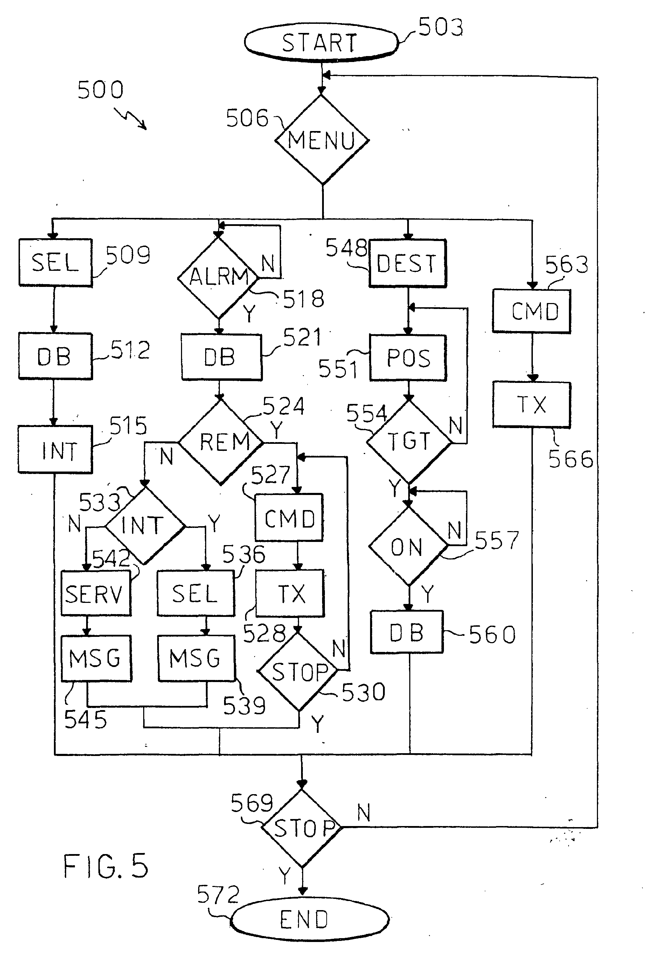

With reference now to Fig. 5 (together with Fig. 3), the management program 340, when run in the processing system of the control centre 110, performs a method 500 which starts at the block 503 and passes to block 506 where a choice menu is displayed to an operator. The method then performs a routine corresponding to the choice made; in particular, if the operator selects the ordinary maintenance management function, the routine defined by blocks 509-515 is performed, if the operator selects the alarm condition management function, the routine defined by blocks 518-545 is performed, if the operator selects the shelter position control function, the routine defined by blocks 548-560 is performed, while if the operator selects the function for sending command signals to the shelter the routine defined by blocks 563-566 is performed. In any case, the method then passes to block 569 (described below).

If we now consider block 509 (ordinary maintenance management function), the operator selects one of the shelters. The method then passes to block 512, where the information - for the selected shelter - relating to previous maintenance action and the alarm signals received following the last maintenance operation are read from the data base 345. The method passes to block 515, where the type of maintenance to be carried out on the selected shelter is defined depending on the information read. A report relating to the maintenance action is then printed and supplied to the maintenance team assigned (the information supplied by the maintenance team at the end of the maintenance work is subsequently stored in the data base 345).

With regard to block 518 (alarm condition management function), it is checked whether the control centre 110 has received an alarm signal from one of the shelters. If this is not the case, the method returns to block 518 in an idle loop. If a signal has been received, the method passes to block 521, where the information relating to the alarm signal is stored in the data base 345, and at the same time the acoustic warning device 330 is activated so as to signal the alarm condition to the operator.

The method then proceeds to block 524 where the operator determines whether the alarm condition may be remotely managed by the control centre (without any direct action taken at the shelter). For example, the operator assigns a priority with a low level or high level to the condition corresponding to the alarm signal (depending on its type). If the priority has a low level, the alarm condition is remotely managed and the method continues to block 527, where the operator determines the maintenance action to be carried out on the shelter in response to the alarm signal (for example, modification of the operational parameters, detection of status parameters for diagnostics functions, activation or deactivation of operating units). Passing to block 528, a command signal indicating the maintenance action is sent to the shelter; in particular, a message corresponding to the command signal is sent by the modem 335, via the telematic network 115, to the ground station; the ground station sends the command signal to the satellite and then to the shelter. The method then checks at block 530 whether the alarm condition management procedure has been completed. If this is not so, the method returns to block 527 in order to repeat the above mentioned operations.

Returning to block 524, if the priority has a high level, the alarm condition requires an extraordinary maintenance operation at the shelter and the method proceeds to block 533 where it is checked whether the operation may be carried out by one of the maintenance teams. If this is possible, the method continues to block 536, where the control centre 110 polls the control units of the various maintenance teams so as to receive a signal indicating their current position (determined by the GPS detector); the method then selects the maintenance team closest to the shelter (for example by calculating a simple geometric distance of each maintenance team from the shelter). Passing to block 539, the control system sends a message (indicating the type of maintenance operation which must be carried out at the shelter) to the selected maintenance team.

On the other hand, if the operation cannot be carried out by one of the maintenance teams, the method proceeds to block 542, where the operator selects one of the assistance centres depending on the type of condition corresponding to the alarm signal (for example, the centre specialised in air-conditioning plants, if the alarm condition relates to one of the air-conditioners, or the centre specialised in electrical plants, if the alarm condition relates to the electrical panel or the power supply unit). Passing on to block 545, the control system 110 sends a corresponding message to the selected assistance centre.

If we now consider block 548 (shelter position control function), the operator enters a destination location for the shelter. The method then passes to block 551, where a command signal indicating the position detection request is sent to the shelter (with a frequency which may be selected by the operator). As soon as the control centre 110 receives the corresponding position signal from the shelter, the method checks at block 554 whether the shelter has reached the destination location (to a degree of accuracy of a few hundred metres).

If this is not the case, the method returns to block 551 in order to repeat the operations described above. If this is the case, however, the method checks at block 557 whether the control centre 110 has received the initial activation signal from the shelter. If no signal has been received, the method returns to block 557 in an idle loop, while if the signal has been received the method proceeds to block 560, where the information relating to the initial activation of the shelter is stored in the data base 345 (for example, for verification of warranty cover).

If we now consider block 563 (command signal send function), the operator selects the action to be carried out on the shelter (for example, modification of the operational parameters, detection of status parameters, activation or deactivation of operating units, testing). The method then passes to block 566, where a corresponding command signal is sent to the shelter (and, if necessary, a response signal sent from the shelter is displayed on the monitor 325 as soon as it is available).

At the end of the various procedures described above, the method checks at block 569 whether the operator wishes to terminate the management program 340. If this is not the case, the method returns to block 506 in order to repeat the cycle described above, otherwise the method passes to the final block 572.

Similar considerations apply where the management program 340 performs a different equivalent method, for example there are various concurrent processes which perform the above mentioned operations in parallel, the control centre 110 is equipped with an expert system which automatically determines the priority level of the alarm condition and the command signals to be sent to the shelter, an escape function is envisaged in order to exit from the various procedures, the control centre communicates with the ground station and with the assistance centres by means of messages of the instantaneous type, faxes, and the like.

Alternatively, different or further actions in response to the alarm signals are envisaged. More generally, in the maintenance system in accordance with the present invention, each shelter is able to detect alarm conditions and send an alarm signal indicating the detected condition to a remote control centre; the control centre determines a maintenance action in response to the alarm signal and sends a command signal indicating the maintenance action to the shelter, which carries out said maintenance action in response to the command signal.

With the solution according to the present invention it is possible to send the maintenance teams to the shelter only when actually necessary. For example, in the case of alarm conditions due to not particularly serious problems, it is possible to solve temporarily these problems from the control centre (with a view to subsequent maintenance action). On the other hand, if the problem requires immediate maintenance, it is possible to detect precisely the type of action required so as to equip the maintenance team with all the necessary spare parts. This enables the maintenance costs to be drastically reduced, ensuring at the same time better operation of the shelter.

The particular embodiment of the maintenance system described above offers further advantages. For example, with the function for modifying the operational parameters of the shelter, it is possible to adapt in an optimum manner operation of the shelter to the environmental conditions, for example by controlling the operation of the air-conditioners in accordance with the actual external temperature (and not merely an estimated mean temperature as with known shelters). With the functions for detecting the status parameters and testing the shelter, it is possible to perform remote diagnostics functions and continuous monitoring of operation of the shelter. The functions for activation/deactivation of the operating units and classification of the alarm conditions (high/low priority) result in a more efficient and flexible management of the alarm conditions.

With the alarm signal storage function it is possible to program in an optimum manner the ordinary maintenance operations performed at the shelters. The function for selecting the maintenance teams in accordance with their position ensures speedy intervention at the shelter. Moreover, with the function for forwarding the alarm signals to the assistance centres it is possible to optimise management of the maintenance operations.

Alternatively, it is possible to envisage only some of these functions (or even none of them) or else functions of a different type, such as a function for statistical analysis of the alarm conditions, a paging function for the control centre and maintenance teams, etc. On the other hand, these additional functions may be used (separately or in combination with each other) also without the alarm condition management function described above.

Obviously a person skilled in the art may make numerous modifications and variations to the maintenance system for shelters described above, in order to satisfy contingent and specific requirements, all of which, however, are contained within the protective scope of the invention as defined by the following claims.

## Claims

1. Maintenance system (100) for shelters (105) each comprising means (250) for detecting alarm conditions of the shelter (105), means (275) for sending an alarm signal indicating the condition detected to a remote control centre (110),
**characterized in that**
the control centre (110) comprises means (340) for determining a maintenance action in response to the alarm signal and means (335) for sending a command signal indicating the maintenance action to the shelter (105), the shelter (105) further comprising means (250) for carrying out the maintenance action in response to the command signal.

2. Maintenance system (100) according to Claim 1, wherein the control centre (110) further comprises means (340) for sending to the shelter (105) a modification signal indicating a request for modification of operational parameters of the shelter (105), and the shelter (105) comprises means (250) for modifying the operational parameters in response to the modification signal.

3. Maintenance system (100) according to Claim 1 or 2, wherein the control centre (110) further comprises means (240) for sending to the shelter (105) a detection signal indicating a request for detection of status parameters of the shelter (105), and the shelter (105) comprises means (250,275) for detecting the status parameters in response to the detection signal and for sending a signal indicating the status parameters detected to the control centre (110).

4. Maintenance system (100) according to any one of Claims 1 to 3, wherein the shelter (105) includes a plurality of operating units (215, 220a, 220b, 225, 235, 240a, 240b, 245) each one suitable to be activated or deactivated independently, the control centre (110) further comprising means (340) for sending to the shelter (105) a switching signal indicating a request for activation or deactivation of a selected unit and the shelter (105) comprising means (250) for activating or deactivating the selected unit in response to the switching signal.

5. Maintenance system (100) according to any one of Claims 1 to 4, wherein the control centre (110) further comprises means (340) for assigning a priority to the condition corresponding to the alarm condition and for activating an extraordinary maintenance operation at the shelter (105) depending on the priority assigned.

6. Maintenance system (100) according to Claim 5, wherein a plurality of maintenance teams (125i) is available, the maintenance system (100) further comprising means (130i) for detecting the current position of each maintenance team and the control centre (110) comprising means (340) for selecting one of the maintenance teams to be sent to the shelter (105) depending on the distance of the maintenance teams from the shelter (105).

7. Maintenance system (100) according to Claim 5 or 6, further comprising means (335,340,115) for forwarding the alarm signal to an external assistance centre (120a,120b) depending on a type of the condition corresponding to the alarm signal.

8. Maintenance system (100) according to any one of Claims 1 to 7, wherein the control centre (110) further comprises means (345) for storing the alarm signals and means (340) for programming ordinary maintenance operations at the shelter (105) depending on the alarm signals stored.

9. Maintenance system (100) according to any one of Claims 1 to 8, wherein the control centre (110) further comprises means (335,340) for sending to the shelter (105) a test signal indicating a request for testing of the shelter (105), and the shelter (105) comprises means (250,275) for carrying out testing of the shelter in response to the testing signal and for sending a signal indicating a result of the test carried out at the control centre (110).

10. Maintenance system (100) according to any one of Claims 1 to 9, wherein the shelter (105) further comprises means (250,275) for performing an activation of the shelter (105) and for sending a signal indicating the activation to the control centre (110).

11. Control apparatus (250,275) of a shelter (105) for use in the maintenance system (100) of any one of Claims 1 to 10, the control apparatus (250,275) comprising said means (250) for detecting alarm conditions of the shelter (105), said means (275) for sending the alarm signal to the control centre, and said means (250) for carrying out the maintenance action.

12. Shelter (105) comprising the control apparatus (250,275) according to Claim 11.

13. Remote control system (110) for use in the maintenance system (100) according to any one of Claims 1 to 10, the control centre (110) comprising said means (340) for determining the maintenance action and said means (335) for sending the command signal to the shelter (105).

14. Maintenance method for shelters (400,500) comprising the steps of:
detecting (420) alarm conditions of a shelter,
sending (430) an alarm signal indicating the condition detected to a remote control centre,
**characterized by** the steps of:
determining (542) a maintenance action in response to the alarm signal,
sending (545) a command signal indicating the maintenance action to the shelter (105),
carrying out (435-460) the maintenance action in response to the command signal.
